# EUROPEAN PATENT SPECIFICATION

(11) **EP 1 938 559 B1**
(45) Date of publication and mention of the grant of the patent: **17.08.2011**
(21) Application number: 06815740.3
(22) Date of filing: 27.09.2006
(51) Int. Cl.: H04L 29/08

(54) **OPAQUE MECHANISM FOR WEB SERVICE INTEROPERABILITY**
OPAQUE-MECHANISMUS FÜR WEB-DIENST-INTEROPERABILITÄT
MECANISME OPAQUE POUR L'INTEROPERABILITE DE SERVICES WEB

(30) Priority: 27.09.2005 US 720735 P; 26.09.2006 US 535420
(43) Date of publication of application: 02.07.2008
(73) Proprietor: Siemens Product Lifecycle Management Software Inc., Plano, TX 75024 (US)
(72) Inventor: VARDHAN, Puneet, MN 55126 (US); MARCHI, Ronald, CA 90630 (US)
(74) Representative: Kley, Hansjörg
(86) International application number: PCT/US2006/037957
(87) International publication number: WO 2007/038706

(56) References cited:
- EP-A- 1 469 386
- US-A1- 2004 225 724
- US-A1- 2005 086 594
- POWEL, MATT: "Web Services, Opaque Data, and the Attachments Problem" MSDN, WEB SERVICES TECHNICAL ARTICLES, [Online] June 2004 (2004-06), pages 1-8, XP002416423 Microsoft MSDN Retrieved from the Internet: URL:http://msdn2.microsoft.com/en-us/libra ry/ms996462.aspx> [retrieved on 2007-01-24]

## Description

### Technical Field

The presently preferred embodiment of the innovations described herein relate generally to interoperability of machine-to-machine interaction over a network. More specifically, the presently preferred embodiment relates to an opaque mechanism for web service interoperability.

### Background

Most people commonly refer to the Internet as the World Wide Web, or Web for short. The Web uses multimedia (graphics, text, sound, video, etc.) to connect people to information on global scale. The Web has evolved from simply connecting people to people, or people to servers, to connecting servers to servers. Servers connect via web services that provide a standard means of interoperating between different software applications running on a variety of platforms and/or frameworks. The phrase "web service" is defined by the W3C (World Wide Web Consortium, www.w3c.org) as a software system designed to support interoperable machine-to-machine interaction over a network. Those web services are characterized by their great interoperability and extensibility, as well as their machine-processable descriptions thanks to the use of XML. They can be combined in a loosely coupled way in order to achieve complex operations. Programs providing simple web services (or simply referred to as "services") can interact with each other in order to deliver sophisticated added-value benefits.

Other systems interact with the web service in a manner prescribed by using a protocol for exchanging XML-based messages, for example the SOAP protocol, over a computer network. SOAP messages are typically conveyed using HTTP with an XML serialization in conjunction with other Web-related standards. Using standard W3C XML schemas, UGS Corp. created PLM XML to be an emerging format for facilitating product lifecycle interoperability using XML. Unfortunately, however, the PLM XML schema is not entirely supported by any of the major SOAP stack vendors.

What is needed is a custom serializer/de-serializer so that a PLM XML document can be marshaled/un-marshaled into Java Objects for processing regardless of SOAP stack vendor.
United states patent application US2005/086594 describes a system in which information that is encoded in different character sets can be combined within a single package without having to perform character set-to-character set encoding, either by interleaving the data or by referencing the data.
In Powel, Matt "Web Services, Opaque Data, and the Attachments Problem" MSDN, Web Services Technical Articles, [online] June 2004 (2004-06), pages 1-8, Microsoft MSDN, the possibility of dealing with opaque data in web services (including SwA, WS-Attachments and DIME, PASwA, MTOM) is explored.

To achieve the foregoing, and in accordance with the purpose of the presently preferred embodiment as broadly described herein, the present application provides a method according to claim 1. The method, wherein said parsing step is included in a Web Services Definition Language (WSDL) format. The method, wherein said translating step uses a XML namespace. The method, wherein said XML namespace is an interoperability format. The method, wherein said communicating step occurs over a network capable of interoperable machine-to-machine interaction. The method, wherein said transport protocol stack is a protocol for exchanging XML-based messages over a computer network. The method, wherein said transport protocol stack is SOAP.

Another advantage of the presently preferred embodiment is to provide a computer-program product according to claim 8 tangibly embodied in a machine readable medium to perform the method of claim 1. The computer-program product, wherein said instructions for parsing is included in a Web Services Definition Language (WSDL) format. The computer-program product, wherein said instructions for translating uses a XML namespace. The computer-program product, wherein said XML namespace is an interoperability format. The computer-program product, wherein said instructions for communicating occurs over a network capable of interoperable machine-to-machine interaction. The computer-program product, wherein said transport protocol stack is a protocol for exchanging XML-based messages over a computer network. The computer-program product, wherein said transport protocol stack is SOAP.

And another advantage of the presently preferred embodiment is to provide a data processing system according to claim 10.

Other advantages of the presently preferred embodiment will be set forth in part in the description and in the drawings that follow, and, in part will be learned by practice of the presently preferred embodiment. The presently preferred embodiment will now be described with reference made to the following Figures that form a part hereof. It is understood that other embodiments may be utilized and changes may be made without departing from the scope of the presently preferred embodiment.

### Brief Description of the Drawings

A presently preferred embodiment will hereinafter be described in conjunction with the appended drawings, wherein like designations denote like elements, and:

**Figure 1** is a block diagram of a computer environment in which the presently preferred embodiment may be practiced;

**Figure 2** is a flowchart of the major components for a system and method of an opaque mechanism for web service interoperability;

**Figure 3** is a flowchart illustrating the creation of opaque elements in the presently preferred embodiment;

**Figure 4** is a flowchart for the creation of type bindings for data types;

**Figure 5** is a flowchart illustrating deep copy for opaque data during runtime; and

**Figure 6** is a flowchart illustrating a architecture view of the processes disclosed in the presently preferred embodiment.

### Detailed Description of the Preferred Embodiments

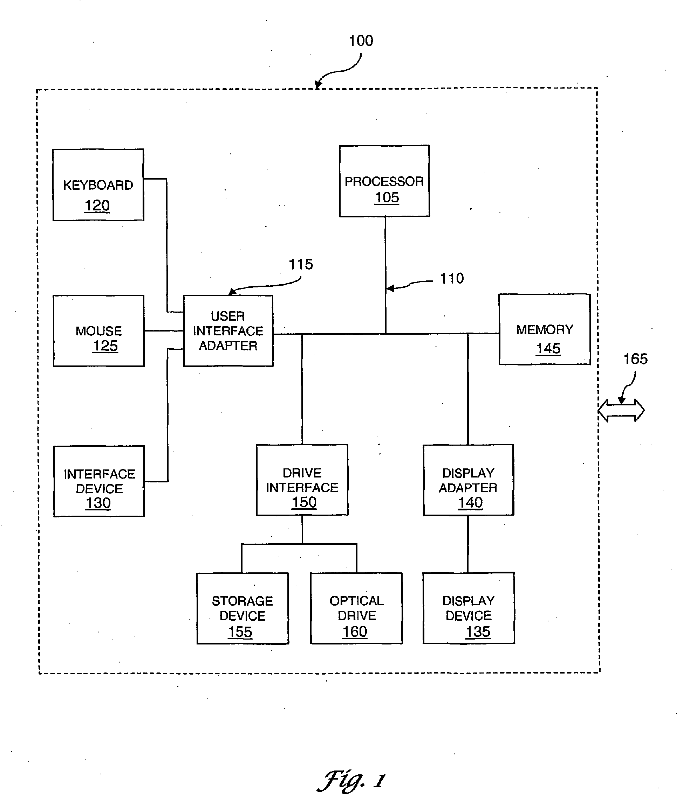

The numerous innovative teachings of the present application will be described with particular reference to the presently preferred embodiments. It should be understood, however, that this class of embodiments provides only a few examples of the many advantageous uses of the innovative teachings herein. The presently preferred embodiment provides, among other things, a system and method of opaque mechanism for web service interoperability. Now therefore, in accordance with the presently preferred embodiment, an operating system executes on a computer, such as a general-purpose personal computer. **Figure 1** and the following discussion are intended to provide a brief, general description of a suitable computing environment in which the presently preferred embodiment may be implemented. Although not required, the presently preferred embodiment will be described in the general context of computer-executable instructions, such as program modules, being executed by a personal computer. Generally program modules include routines, programs, objects, components, data structures, etc., that perform particular tasks or implementation particular abstract data types. The presently preferred embodiment may be performed in any of a variety of known computing environments.

With reference to Figure 1, an exemplary system for implementing the presently preferred embodiment includes a general-purpose computing device in the form of a computer **100,** such as a desktop or laptop computer, including a plurality of related peripheral devices (not depicted). The computer 100 includes a microprocessor **105** and a bus **110** employed to connect and enable communication between the microprocessor 105 and a plurality of components of the computer 100 in accordance with known techniques. The bus 110 may be any of several types of bus structures including a memory bus or memory controller, a peripheral bus, and a local bus using any of a variety of bus architectures. The computer 100 typically includes a user interface adapter **115,** which connects the microprocessor 105 via the bus 110 to one or more interface devices, such as a keyboard **120,** mouse **125,** and/or other interface devices **130,** which can be any user interface device, such as a touch sensitive screen, digitized pen entry pad, etc. The bus 110 also connects a display device **135,** such as an LCD screen or monitor, to the microprocessor 105 via a display adapter **140.** The bus 110 also connects the microprocessor 105 to a memory **145,** which can include ROM, RAM, etc.

The computer 100 further includes a drive interface **150** that couples at least one storage device **155** and/or at least one optical drive 160 to the bus. The storage device 155 can include a hard disk drive, not shown, for reading and writing to a disk, a magnetic disk drive, not shown, for reading from or writing to a removable magnetic disk drive. Likewise the optical drive **160** can include an optical disk drive, not shown, for reading from or writing to a removable optical disk such as a CD ROM or other optical media. The aforementioned drives and associated computer-readable media provide non-volatile storage of computer readable instructions, data structures, program modules, and other data for the computer 100.

The computer 100 can communicate via a communications channel **165** with other computers or networks of computers. The computer 100 may be associated with such other computers in a local area network (LAN) or a wide area network (WAN), or it can be a client in a client/server arrangement with another computer, etc. Furthermore, the presently preferred embodiment may also be practiced in distributed computing environments where tasks are performed by remote processing devices that are linked through a communications network. In a distributed computing environment, program modules may be located in both local and remote memory storage devices. All of these configurations, as well as the appropriate communications hardware and software, are known in the art.

Software programming code that embodies the presently preferred embodiment is typically stored in the memory 145 of the computer 100. In the client/server arrangement, such software programming code may be stored with memory associated with a server. The software programming code may also be embodied on any of a variety of non-volatile data storage device, such as a hard-drive, a diskette or a CD-ROM. The code may be distributed on such media, or may be distributed to users from the memory of one computer system over a network of some type to other computer systems for use by users of such other systems. The techniques and methods for embodying software program code on physical media and/or distributing software code via networks are well known and will not be further discussed herein.

### System

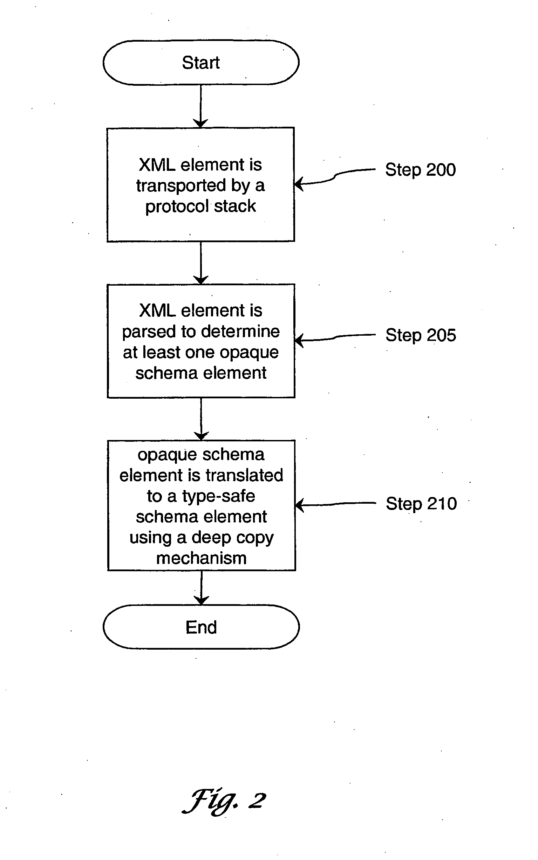

**Figure 2** is a flowchart of the major components for a system and method of an opaque mechanism for web service interoperability. As shown in Figure 2, an XML element is transported by a protocol stack **(Step 200).** Then the XML element is parsed to determine at least one opaque schema element **(Step 210).** Finally the opaque schema element is translated to a type-safe schema element using a deep copy mechanism **(Step 215).**

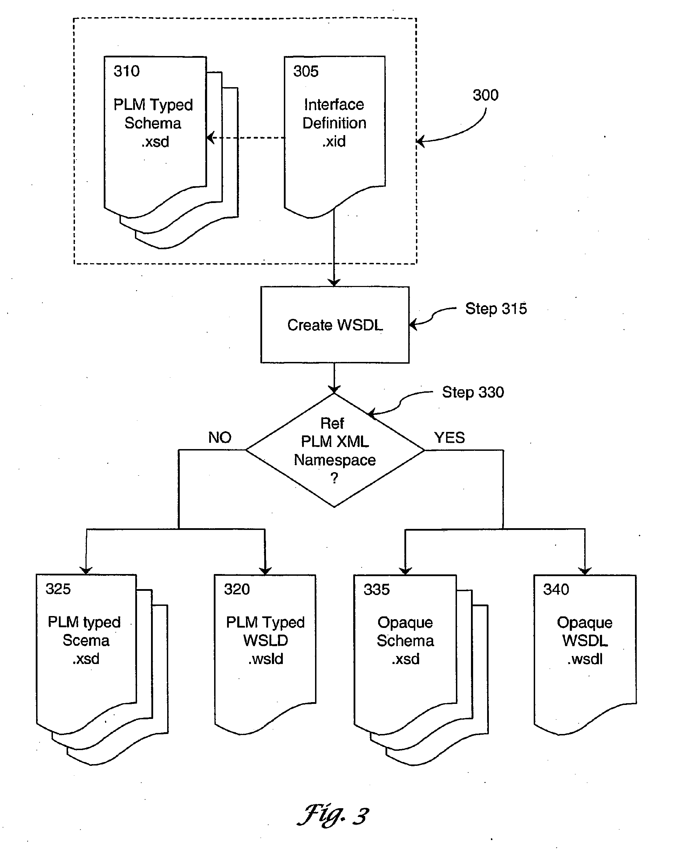

**Figure 3** is a flowchart illustrating the creation of opaque elements in the presently preferred embodiment. A software build tool **300,** such as Ant by Apache, for automating software build processes taking as input an XML Interface Definition file **305** that references all needed XML Schema **310** to generate a PLM XML Typed WSDL **(Step 315).** The files generated by the software build tool 300, a PLM Typed WSDL **320** and a PLM Typed Schema **325,** are the source documents for the Web Service artifacts, discussed in more detail below. If, however, the input XML Schema files reference any elements from the PLM XML Namespace, such as the PLM XML schema of UGS Corp., which may be found at www.plmxml.org **(Step 330),** then an opaque version of the XML Schema, an Opaque Schema (.xsd) 335, is automatically created that hides the PLM XML elements in a string. A corresponding Opaque WSDL (.wsdl) **340** is also be generated for the web service.

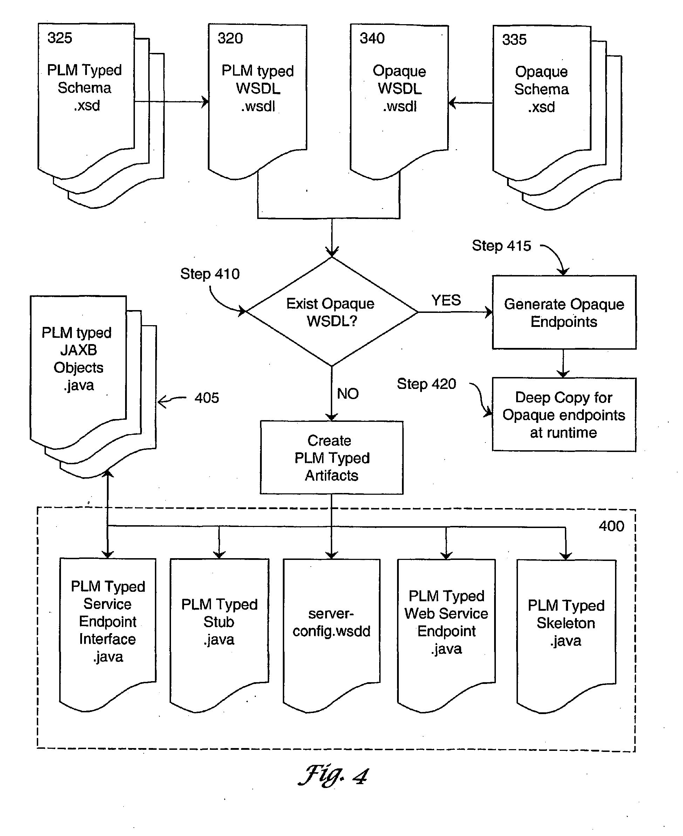

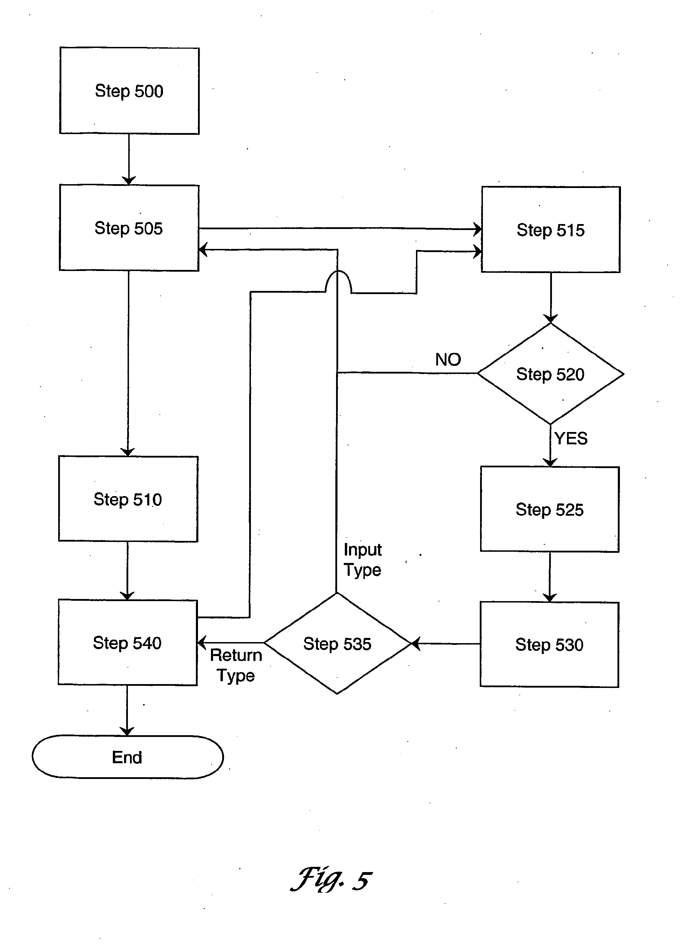

**Figure 4** is a flowchart for the creation of type bindings for data types. As shown in Figure 4, the software build tool takes as input the WSDL files and associated XML Schemas to generate various type-bindings for the data types defined in the type-safe XML Schema, generally illustrated at **400,** in addition to PLM Typed JAXB objects **405,** where JAXB is convenient way to bind an XML Schema to a representation in Java code. If, however, the source WSDL is the Opaque WSDL 340 **(Step 410),** then the Opaque endpoints are generated **(Step 415)** and the deep copy mechanism discussed in Figure 5, below, is used to parse and copy the Opaque Schema 335 elements to java objects **(Step 420).** The opaque endpoint contains the code necessary to invoke the appropriate deep copy helper for transfer of opaque data to java objects.

**Figure 5** is a flowchart illustrating deep copy for opaque data during runtime. As shown in Figure 5, the opaque endpoint is invoked via the web service call **(Step 500).** The opaque endpoint calls a deep copy helper corresponding to an input type to extract the opaque data **(Step 505).** Next, the endpoint is invoked with the input object containing all of the PLM XML data **(Step 510).** Meanwhile, the deep copy helper procedure fills JAXB objects with opaque data corresponding to each schema data type **(Step 515).** If the schema data type DOES NOT refer to child schema elements **(Step 520),** then return to Step 505. But if schema data type DOES refer to child schema elements (Step 520), then deep copy is invoked for each child element **(Step 525).** Deep copy is recursively repeated until all child elements are covered **(Step 530).** The data type returned can be of two forms, an input type or a return type. If the data type is an input type **(Step 535),** then return to Step 505. Otherwise if the data type returned is a return type, then call deep copy helper corresponding to the return type to convert PLM XML data to an opaque string **(Step 540).**

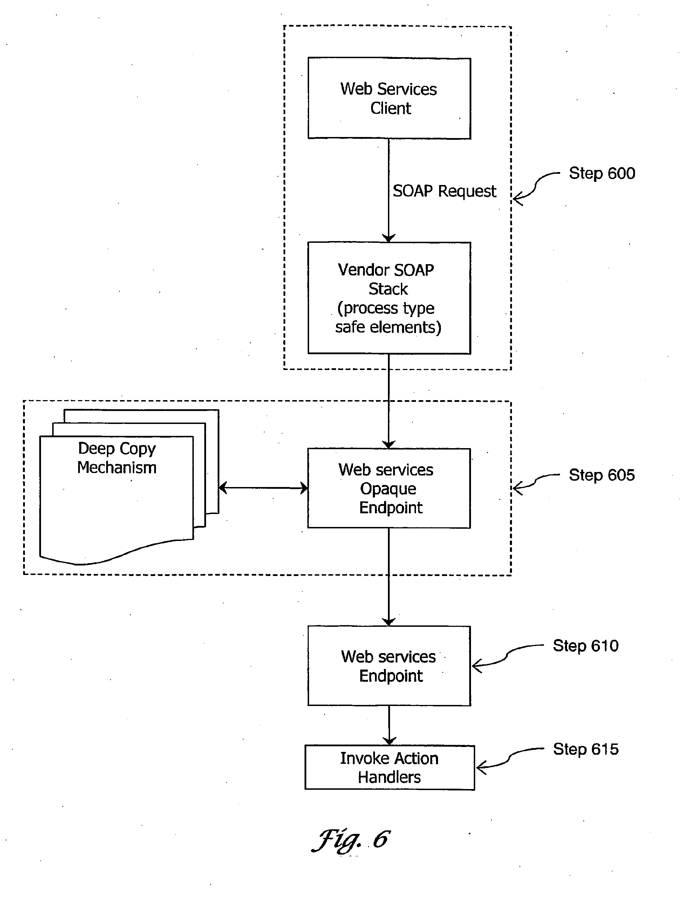

**Figure 6** is a flowchart illustrating a architecture view of the processes disclosed in the presently preferred embodiment. As show in Figure 6, and further referenced in Figures 3 & 4, during runtime, type-safe data is parsed and mapped to corresponding java objects by the vendor SOAP stack **(Step 600).** The opaque endpoint is invoked that calls the appropriate deep copy helpers to fill in the data corresponding to the opaque types **(Step 605).** Once the entire data is copied to java objects, then the web services end point is called **(Step 610)** to invoke action handlers **(Step 615)** that handles the copied data for an action defined by the user and/or the system.

### Conclusion

The presently preferred embodiment may be implemented in digital electronic circuitry, or in computer hardware, firmware, software, or in combinations thereof. An apparatus of the presently preferred embodiment may be implemented in a computer program product tangibly embodied in a machine-readable storage device for execution by a programmable processor; and method steps of the presently preferred embodiment may be performed by a programmable processor executing a program of instructions to perform functions of the presently preferred embodiment by operating on input data and generating output.

The presently preferred embodiment may advantageously be implemented in one or more computer programs that are executable on a programmable system including at least one programmable processor coupled to receive data and instructions from, and to transmit data and instructions to, a data storage system, at least one input device, and at least one output device. The application program may be implemented in a high-level procedural or object-oriented programming language, or in assembly or machine language if desired; and in any case, the language may be a compiled or interpreted language.

Generally, a processor will receive instructions and data from a read-only memory and/or a random access memory. Storage devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks. Any of the foregoing may be supplemented by, or incorporated in, specially-designed ASICs (application-specific integrated circuits).

A number of embodiments have been described. It will be understood that various modifications may be made without departing from the spirit and scope of the presently preferred embodiment, such as additional protocols for exchanging XML-based messages over a computer network can include GXA, REST, and XML-RPC, for example. Likewise other formats, other than the PML XML schema, for facilitating product lifecycle interoperability using XML are anticipated by the disclosed presently preferred embodiment. Alternatively, the data structure can be serialized in the java objects to XML and apply a style sheet to the XML document, and then marshal the new XML document to the target java object. Therefore, other implementations are within the scope of the following claims.

## Claims

1. A method of parsing a schema across a system to support interoperable machine-to-machine interaction over a network, comprising the steps of:
- communicating a plurality of data in a data defining mark-up language file by a transport protocol stack (step 200); wherein said data defining mark-up language is XML, in the following also denoted by XML data;
parsing said data defining mark-up language to determine at least one opaque schema element (step 250) by a deep copy mechanism (step 420) comprising the steps of:
- calling a deep copy helper corresponding to an input type to extract a plurality of opaque data (step 505);
- filling a plurality of objects with said opaque data in a recursive manner (step 515, step 530); and
- returning said objects in the form of a return type to convert said XML data to an opaque string; and the method further comprising; translating said at least one opaque schema element to a type-safe schema element (step 210).

2. The method of claim 1, wherein said parsing step is included in a Web Services Definition Language WSDL format.

3. The method of one of claims 1 to 2, wherein said translating step (step 210) uses a XML namespace.

4. The method of one of claims 1 to 3, wherein said communicating step (step 200) occurs over a network capable (165) of interoperable machine-to machine interaction.

5. The method of one of claims 1 to 4, wherein said transport protocol stack is a protocol for exchanging XML-based messages over a computer network.

6. The method of one of claims 1 to 5, wherein said transport protocol stack is SOAP.

7. Use of the method according to one of claims 1 to 6 for performing a recursive deep copy on opaque schema data between different vendors having web services which provides means of interoperating between software applications running on a variety of platforms and/or frameworks.

8. Computer program product comprising program instructions for execution by at least one processor, wherein the program instructions cause the at least one processor to perform or use all the steps of the method according to one of claims 1 to 6.

9. Apparatus comprising at least one processor, wherein the apparatus is adapted for performing or using all the steps of the method according to one of claims 1 to 6.

10. A system comprising:
a processor (105) configured to:
communicate a plurality of data in a data defining mark-up language file by
a transport protocol stack, wherein said data defining mark-up language is XML, in the following also denoted by XML data;
parse said data defining mark-up language to determine at least one opaque
schema element using a deep copy mechanism (step 420) comprising the steps of:
calling a deep copy helper to extract a plurality of opaque data corresponding to input type (step 505);
filling a plurality of objects with said opaque data in a recursive manner (step 515, step 530);
returning said objects in the form of a return type to convert said
XML data to an opaque string;
the processor also configured to:
translate said at least one opaque schema element to a type-safe schema
element element; and
a user interface (120; 125; 130) configured to receive user input.

11. The system of claim 10, wherein the processor (105) is configured to parse in a Web Services Definition Language WSDL format.

12. The system of one of claims 10 to 11, wherein the processor (105) is configured to translate using a XML namespace.

13. The system of one of claims 10 to 12, wherein the processor (105) is configured to communicate over a network capable of interoperable machine-to-machine interaction.

14. The system of one of claims 10 to 13, wherein said transport protocol stack is a protocol for exchanging XML-based messages over a computer network.

## Patentansprüche

1. Verfahren zum Parsen eines Schemas über ein System, um eine interoperable Maschine-zu-Maschine-Interaktion über ein Netzwerk zu unterstützen, welches die folgenden Schritte umfasst:
- Kommunizieren einer Vielzahl von Daten in einer Datei in einer Daten definierenden Markierungssprache durch einen Transportprotokollstapel (Schritt 200); wobei die besagte Daten definierende Markierungssprache XML ist, im Folgenden auch als XML-Daten bezeichnet;
Parsen der besagten Daten definierenden Markierungssprache, um mindestens ein Opaque-Schemaelement (Schritt 250) durch einen Deep-Copy-Mechanismus (Schritt 420) zu bestimmen, welcher die folgenden Schritte umfasst:
- Aufrufen eines Deep-Copy-Helpers, der einem Eingabetyp entspricht, um eine Vielzahl von Opaque-Daten zu extrahieren (Schritt 505);
- Füllen einer Vielzahl von Objekten mit den besagten Opaque-Daten auf eine rekursive Weise (Schritt 515, Schritt 530); und
- Zurückgeben der besagten Objekte in Form eines Rückgabetyps, um die besagten XML-Daten in einen Opaque String zu konvertieren; und wobei das Verfahren ferner umfasst: Übersetzen des besagten mindestens einen Opaque-Schemaelements in ein typsicheres Schemaelement (Schritt 210).

2. Verfahren nach Anspruch 1, wobei der besagte Schritt des Parsens in einem Format einer Web-Dienste-Definitionssprache (Web Services Definition Language, WSDL) erfolgt.

3. Verfahren nach einem der Ansprüche 1 bis 2, wobei der besagte Schritt des Übersetzens (Schritt 210) einen XML-Namensraum verwendet.

4. Verfahren nach einem der Ansprüche 1 bis 3, wobei der besagte Schritt des Kommunizierens (Schritt 200) über ein Netzwerk erfolgt, das zu einer interoperablen Maschine-zu-Maschine-Interaktion in der Lage ist (165).

5. Verfahren nach einem der Ansprüche 1 bis 4, wobei der besagte Transportprotokollstapel ein Protokoll zum Austauschen von XML-basierten Nachrichten über ein Computernetzwerk ist.

6. Verfahren nach einem der Ansprüche 1 bis 5, wobei der besagte Transportprotokollstapel SOAP ist.

7. Verwendung des Verfahrens nach einem der Ansprüche 1 bis 6 zum Ausführen einer rekursiven Deep Copy auf Opaque-Schema-Daten zwischen verschiedenen Lieferanten mit Web-Diensten, welche Mittel zur Interoperation zwischen Softwareanwendungen, die auf vielfältigen Plattformen und/oder Frameworks ausgeführt werden können, bereitstellt.

8. Computerprogrammprodukt, welches Programmanweisungen zur Ausführung durch mindestens einen Prozessor umfasst, wobei die Programmanweisungen bewirken, dass der mindestens eine Prozessor alle Schritte des Verfahrens nach einem der Ansprüche 1 bis 6 ausführt oder verwendet.

9. Vorrichtung, welche mindestens einen Prozessor umfasst, wobei die Vorrichtung dafür geeignet ist, alle Schritte des Verfahrens nach einem der Ansprüche 1 bis 6 auszuführen oder zu verwenden.

10. System, welches umfasst:
einen Prozessor (105), der dazu konfiguriert ist:
eine Vielzahl von Daten in einer Datei in einer Daten
definierenden Markierungssprache durch einen Transportprotokollstapel zu kommunizieren, wobei die besagte Daten definierende Markierungssprache XML ist, im Folgenden auch als XML-Daten bezeichnet;
die besagte Daten definierenden Markierungssprache zu
parsen, um mindestens ein Opaque-Schemaelement unter Verwendung eines Deep-Copy-Mechanismus (Schritt 420) zu bestimmen, welcher die folgenden Schritte umfasst:
Aufrufen eines Deep-Copy-Helpers, um eine Vielzahl von Opaque-Daten zu extrahieren, die einem Eingabetyp entsprechen (Schritt 505);
Füllen einer Vielzahl von Objekten mit den besagten Opaque-Daten auf eine rekursive Weise (Schritt 515, Schritt 530);
Zurückgeben der besagten Objekte in der Form eines Rückgabetyps, um die besagten XML-Daten in einen Opaque String zu konvertieren;
wobei der Prozessor außerdem dafür konfiguriert ist:
das besagte mindestens eine Opaque-Schemaelement in ein
typischeres Schemaelement zu übersetzen; und
eine Benutzeroberfläche (120; 125; 130), die dafür
konfiguriert ist, Benutzereingaben zu empfangen.

11. System nach Anspruch 10, wobei der Prozessor (105) dafür konfiguriert ist, in einem Format einer Web-Dienste-Definitionssprache (Web Services Definition Language, WSDL) zu parsen.

12. System nach einem der Ansprüche 10 bis 11, wobei der Prozessor (105) dafür konfiguriert ist, unter Verwendung eines XML-Namensraumes zu übersetzen.

13. System nach einem der Ansprüche 10 bis 12, wobei der Prozessor (105) dafür konfiguriert ist, über ein Netzwerk zu kommunizieren, das zu einer interoperablen Maschine-zu-Maschine-Interaktion in der Lage ist.

14. System nach einem der Ansprüche 10 bis 13, wobei der besagte Transportprotokollstapel ein Protokoll zum Austauschen von XML-basierten Nachrichten über ein Computernetzwerk ist.

## Revendications

1. Procédé d'analyse d'un schéma à travers un système pour assister une interaction machine-à-machine interopérable sur un réseau, comprenant les stades de :
- mise en communication d'une pluralité de données dans un fichier de langage de balisage définissant une donnée par une pile de protocole de transport ( stade 200 ) ; le langage de balisage définissant une donnée étant XLM, dénommé dans ce qui suit également par donnée XLM ;
d'analyse du langage de balisage définissant une donnée pour déterminer au moins un élément opaque de schéma ( stade 250 ) par un mécanisme de copie profond ( stade 420 ) comprenant les stades de :
- appel d'un assistant de copie profond correspond à un type d'entrée pour extraire une pluralité de données opaques ( stade 505 ) ;
- mise en fichier d'une pluralité d'objets avec la donnée opaque d'une manière récursive ( stade 515, stade 530 ) ; et
- retour de ces objets sous la forme d'un type de retour pour transformer la donnée XML en une chaîne opaque ; le procédé comprenant en outre ;
la traduction du au moins un élément de schéma opaque en un élément de schéma à caractère sûr ( stade 210 ).

2. Procédé suivant la revendication 1, dans lequel le stade d'analyse est inclus dans un format Web Services Definition Language WSDL.

3. Procédé suivant l'une des revendications 1 à 2, dans lequel le stade de traduction ( stade 210 ) utilise un espace nom XML.

4. Procédé suivant l'une des revendications 1 à 2, dans lequel le stade de mise en communication ( stade 200 ) se produit sur un réseau capable ( 165 ) d'interaction machine-à-machine interopérable.

5. Procédé suivant l'une des revendications 1 à 4, dans lequel la pile de protocole de transport est un protocole pour échanger des messages basés sur XML sur un réseau d'ordinateur.

6. Procédé suivant l'une des revendications 1 à 5, dans lequel la pile de protocole de transport est SOAP.

7. Utilisation du procédé suivant l'une des revendications 1 à 6, pour effectuer une copie profonde récursive sur une donnée de schéma opaque, entre des vendeurs différents ayant des services web, qui fournit des moyens d'interopération entre des applications logicielles passant sur une diversité de plateformes et/ou de structures.

8. Produit de programme informatique comprenant des instructions de programme pour exécution par au moins un processeur, dans lequel les instructions de programme font que le au moins un processeur effectue ou utilise tous les stades du procédé suivant l'une des revendications 1 à 6.

9. Dispositif comprenant au moins un processeur, dans lequel le dispositif est conçu pour effectuer ou utiliser tous les stades du procédé suivant l'une des revendications 1 à 6.

10. Système comprenant :
un processeur ( 105 ) configuré pour :
mettre en communication une pluralité de données dans un fichier de langage de balisage définissant une donnée par une pile de protocole de transport, dans lequel le langage de balisage définissant une donnée est XML, dénoté dans ce qui suit également par donnée XML ;
analyser le langage de balisage définissant une donnée pour déterminer au moins un élément de schéma opaque utilisant un mécanisme de copie profond ( stade 420 )
comprenant les stades de :
appel d'un assistant de copie profond correspond à un type d'entrée pour extraire une pluralité de données opaques ( stade 505 ) ;
mise en fichier d'une pluralité d'objets avec la donnée opaque d'une manière récursive ( stade 515, stade 530 ) ; et
retour de ces objets sous la forme d'un type de retour pour transformer la donnée XML en une chaîne opaque ;
le processeur étant configuré aussi pour :
traduire le au moins un élément de schéma opaque en un élément de schéma à caractère sûr ; et
une interface ( 120 ; 125 ; 130 ) utilisateur configurée pour recevoir une entrée d'utilisateur.

11. Système suivant la revendication 10, dans lequel le processeur ( 105 ) est configuré pour analyser dans un format Web Services Definition Language WSDL.

12. Système suivant l'une des revendications 10 à 11, dans lequel le processeur ( 105 ) est configuré pour traduire en utilisant un espace nom XML.

13. Système suivant l'une des revendications 10 à 12, dans lequel le processeur ( 105 ) est configuré pour communiquer sur un réseau capable d'une interaction machine-à-machine interopérable.

14. Système suivant l'une des revendications 10 à 13, dans lequel la pile de protocole de transport est un protocole pour échanger des messages basés sur XML sur un réseau d'ordinateur.
